# EUROPEAN PATENT APPLICATION

(11) **EP 0 618 381 A1**
(43) Date of publication of application: **05.10.1994**
(21) Application number: 94830109.8
(22) Date of filing: 15.03.1994
(51) Int. Cl.: F16G 13/10, B65G 17/38

(54) **A flexible transmission or transport chain**

(30) Priority: 31.03.1993 IT VR930031
(71) Applicant: TECNIDEA CIDUE S.r.l., I-37057 San Giovanni Lupatoto (VR) (IT)
(72) Inventor: Canova, Franco, I-37135 Verona (IT)
(74) Representative: Lanzoni, Luciano

(57) **Abstract**

The invention relates to a flexible transmission or transport chain, in particular of the enmeshed type. It is formed by a series of chain links (1) aligned one to another, in which each link (1) is connected to contiguous links (1) by a hinge pivot (7), and is thus capable of rotating about the axes (X-Y) of the pivots (7). Each of the axes. (X-Y) is skewed with respect to the two closest axes (Y-X) to it. The chain can thus curve in any way and is utilizable for example as a tranmission organ of motion in mechanical devices having coplanar or skewed axes, as well as a transport chain associated to motorizations of conveyor belts, grid conveyors, roller conveyors, etc.

## Description

The invention relates to a flexible transmission or transport chain.

More specifically, the flexible chain can be used for transmitting motion among components of mechanical devices and, in a simple case, between a gearing keyed on a drive shaft to a gearing mounted on a driven shaft.

In a further guise, the invention can be used as a transporting organ in belt-, roller- and grid-type conveyors and the like.

The prior art teaches enmeshed-drive transmission and transport organs (leaving aside friction-drive organs, which present considerable functional limitations), which comprise traditional chains, formed by a series of chain elements reciprocally hinged one to another and rotatable about always-parallel axes.

Prior art transmission and transport chains exhibit some drawbacks which are summarized hereunder, with a) referring to their use as transmission organs and b) to their use as transport organs:
a) traditional chains can only work in one plane.
   Thus, if there should be differing motorizations having axes which are not perpendicular to the work plane of the chain it is necessary to use devices enabling such motorizations to be used, such as perpendicular return groups, conical couplings, secondary shafts for transmitting motion to other organs, and so on.
   Thus the drawback is substantially that these known-type chains are not able to reach any organ on any plane. If there are several organs on different planes, more than one chain is needed: one for each plane, in fact, as well as at least one shaft, one support and a means for imparting motion to the plane containing the chain.
b) Transport is possible only with chains having increased play among their constituent components (internal and external link plates, link bushes, enmeshing rollers etc.) such that the chains have a curved configuration with respect to their lie plane and thus can follow a curved trajectory, a consequence being very elevated resulting friction, both between the internal and external plates of the chain and between the chain itself and the running guides.

Obviously, as in a), the chain motion can only take place in one lie plane.

An essential aim of the invention is thus to obviate the above-mentioned drawbacks evident in the prior art, by providing a flexible transmission or transport organ formed by a series of chain links aligned one to another, and in which each link is connected to contiguous elements by a hinge, and is thus capable of rotating about the axes of the contiguous hinges, in which each of the axes is skewed with respect to the two closest axes to it, and in which each of the hinges is equidistanced from its two neighboring hinges. In particular, each of the links can be formed by a body exhibiting at least a first through hole and at least a projecting portion provided with a second through hole having a skewed axis with respect to the axis of the first hole, the said first and second through-holes being aimed at receiving the articulation pivots of the chains.

Further characteristics and advantages of the present invention will better emerge from the detailed description that follows, of an embodiment of the invention, illustrated in the form of a non-limiting example in the accompanying drawings, in which:
Figure 1 shows a length of the organ of the invention, in a first preferred embodiment, with some parts sectioned, as well as part of a gearwheel designed to enmesh with the organ;
Figure 2 shows a length of the organ, made according to a second preferred embodiment, with a longer step with respect to the embodiment of figure 1;
Figure 3 shows the organ of figure 2, provided with some kinds of transport rollers;
Figure 4 shows the organ of figure 2 in a third preferred embodiemnt;
Figure 5 shows two organs of the type illustrated in figure 4, coupled to each other and bearing some types of transport devices;
Figure 6 shows a length of the organ, realised according to a fourth preferred embodiment;
Figure 7 shows a part of the organ, in a fifth preferred embodiment;
Figure 8 is a schematic view of an application of the organ of the invention.

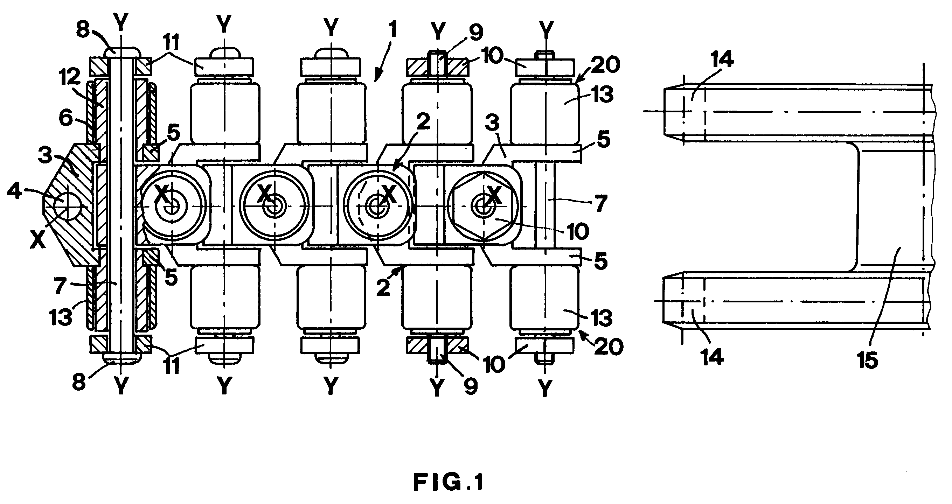

Figure 1 shows that the organ is formed by a series of chain links 1, aligned to each other such as to form a sort of chain. Each chain link 1 is connected to contiguous chain links 1 by hinges 2 which axis of rotation are denoted by X and Y: consequently, each chaining element 1 is able to rotate partially about the two axes.

Each rotation axis X or Y is skewed with respect to the two closest axes Y or X and each hinge 2 is equidistant from its two neighboring hinges 2. In the acccompanying drawings the axes X and Y have been represented as perpendicular to each other.

Each chain link 1 is formed by a body exhibiting a first through hole 4 (with axis X) and two projecting portions 5 equipped with second through holes 6 (with axis Y).

The second through holes 6 receive a pivot 7 which can have, for example, projecting ends 20 which are flattened (denoted by 8), or threaded (9) and nut-coupled (10).

As can be seen from the sectioned view in figure 1, each pivot 7 is associated to two washers 11, two bushes 12 and, externally of the bushes 12, two rollers on which the specially-shaped cogs 14 of a gearwheel 15 mesh.

The chain of figure 1 is essentially a transmission organ, and can be used in realizing conveyors on parallel shafts (as in normal conveyors), conveyors on skewed axes, on non-aligned elements, of perpendicular groups: further, the transmission organ can contemporaneously connect a plurality of non-coplanar mechanical devices. Thus the applications of such a transmission organ are manifold.

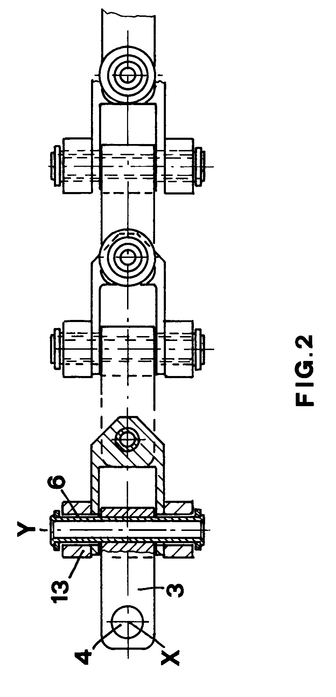

Figure 2 shows a similar chain to that of figure 1, with a longer distance between either axes X or axes Y, and is further equipped with hollow pivots 7 to receive a series of accessories utilizable in transporting. Thanks to these pivots 7 the embodiment of figure 2 can be considered essentially a transport organ, but it can also have a mixed function: for example, while it transports with one set of rollers, the rollers 13 perpendicular to them can be used to perform a different movement.

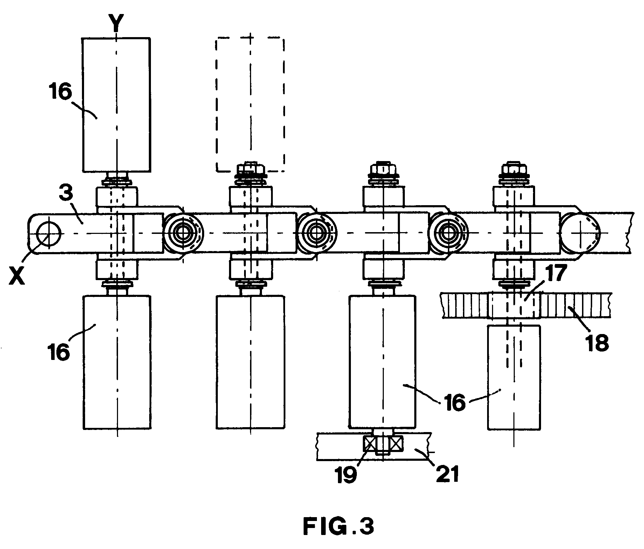

Figure 3 shows the chain of figure 2 once more, provided this time with accessories thanks to which objects can be transported. The accessories are idle conveyor rollers 16 which can be mounted in a variety of ways: on one or two sides of the chain; associated to module gears 17 coaxial to the conveyor rollers 16, which module gears 17 enmesh with a rack 18; or associated to support wheels 19 fixed to ends of one or both conveyor rollers 16, and slidable in a guide 21; and other ways besides.

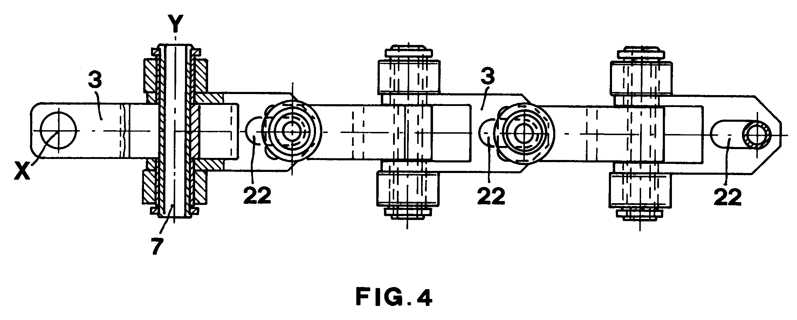

Figure 4 shows the chain of figure 2 in which all the pivots 7 are inserted in slots 22 instead of circular holes 4 and 6, so that each body 3 and therefore each chain link 1 can be neared or distanced with respect to the contiguous body 3.

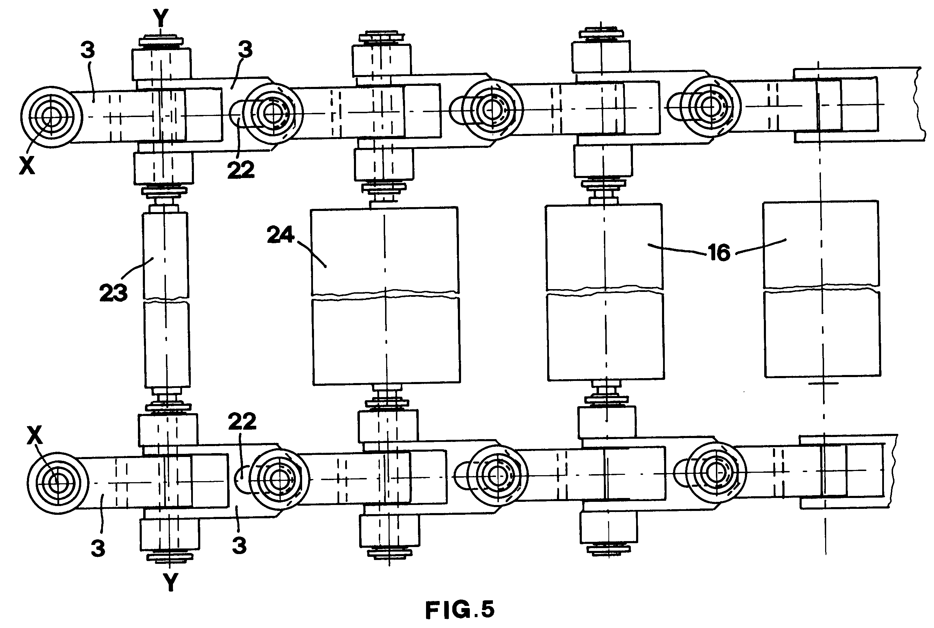

This can be useful, for example, when the configuration of figure 5 is to be used.

In figure 5, the conveyor chain of figure 4 is parallel to a similar chain, such as to form a conveyor cahin able to move along curved trajectories (not illustrated). The slots 22 allow for both the ensuing shortening and lengthening of each organ.

In this way a conveyor is provided (see figure 5) which can perform any movement in space, such as helical trajectories.

The above trajectory is of particular usefulness, since a cylindrical heical trajectory can be used in, for example, a drying tower, a stocking tower, a cooling tower and suchlike. In short, it can be used in conjunction with any kind of product that has to be kept for a predetermined time in set conditions, ie. temperature, pressure, humidity, and so on.

Figure 5 also illustrates some examples of means for transporting objects: cylindrical bars 23, flat elements 24 and idle conveyor rollers 16.

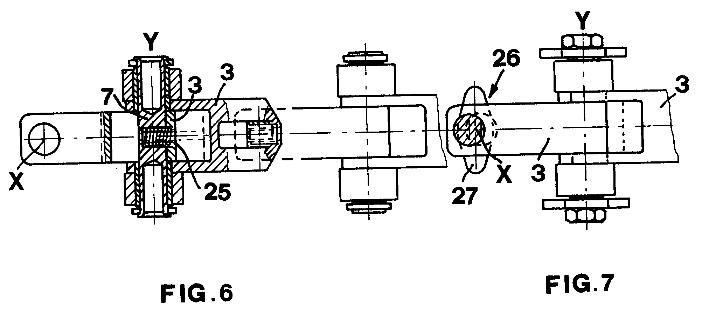

Figure 6 shows a conveyor chain with variable length steps. A helix spring 25, in the illustration a compressed spring, but obviously any kind of elastic element, is positioned between two contiguous bodies 3 (or two chain links 1) to reduce the distance between axes X-Y and thus the step of the organ.

Figure 6 shows that the spring 25 is housed in a seating made in part in one of the pivots 7 and in part in the body 3, and its axis is aligned with the lognitudinal development of the organ.

A speed change is consequent on a reduction in link step, so it is possible to create a motion which because of the spring 25 is slower up to a certain point, say V1, and thereafter is made faster, say V2, by creating friction on the organ and acting on the spring 25 to reduce its effect, so that V2 is more than V1.

The ability to vary the speed opens up many possibilities of use of the conveyor.

Figure 7 shows another system for varying the conveyor speed by changing the relation of axes X-Y. Here, a cam 26, commanded by an oval washer 27 associatede to the pivot 7, which oval washer 27 is activated by an obstacle (not illustrated) placed in its trajectory.

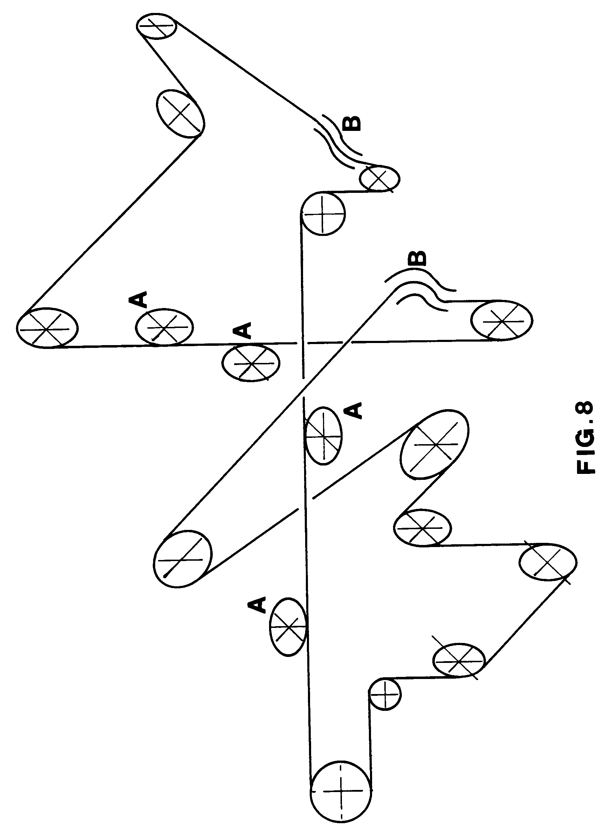

Figure 8 schematically shows one of the innumerable configurations possible using the chain of the invention. For example, the gears indicated by A constitute all induced motion (that is, motion caused by the movement of the transmission organ) while the other gears constitute other motion or transmission on to shafts positioned on other planes.

B denotes guides which can be used to deflect the chain on to curved trajectories.

## Claims

1. A flexible transmission or transport chain formed by a series of aligned chain links (1), in which each of said series of aligned links (1) is connected to contiguous links (1) by a hinge (2), and is thus capable of rotating about axes (X-Y) of contiguous hinges (2), in which each axis is skewed with respect to the two closest axes to it, and in which each of the hinges is equidistanced from its two neighboring hinges.

2. A chain as in claim 1, characterised in that each of the chain lnks (1) is formed by a body exhibiting at least a first through hole and at least a projecting portion provided with a second through hole having a skewed axis with respect to the axis of the first hole, the said first and second through-holes being aimed at receiving the articulation pivots of the chains.

3. A chain as in claim 2, characterised in that each of the pivots (7) exhibits two equal portions (20) projecting from opposite sides of the body (3).

4. A chain as in claim 3, characterised in that each projecting portion (20) is externally equipped with a roller (13) coaxial to and idly rotatable about said projecting portion (20).

5. A chain as in claim 2, characterised in that means for transporting objects are associated to each said pivot (7).

6. A chain as in claim 5, characterised in that the means for transporting objects are conveyor rollers (16).

7. A chain as in claim 6, characterised in that the conveyor rollers (16) are associated to module gears (17), said gears being coaxial to the conveyor rollers (16).

8. A chain as in claim 6, characterised in that the conveyor rollers (16) are equipped at an end with a support wheel (24).

9. A chain as in claim 5, characterised in that the means for transporting objects are flat elements (24).

10. A chain as in claim 2, characterised in that the first through hole (4) and the second through hole (6) are slots (22) such that each chain link (1) can be neared to or distanced from a contiguous link (1), each pivot (7) being inserted in the slot (22).

11. A chain as in claim 10, characterised in that it is associated parallel to a like chain such as to form a conveyor organ able to move along curved trajectories, the slots (22) permitting a take-up of shortenings or lengthenings due to different degrees of curvature of each chain.

12. A chain as in claim 10, comprising a means for traction or distancing a link from a neighboring link, such that a nearing or distancing of a link to a neighboring link is achieved.

13. A chain as in claims 2 and 12, characterised in that the means for traction or distancing a link from a neighboring link is a spring (25) housed in a seating partially made in a pivot (7) and partially in the body (3), an axis of the spring (25) being aligned with a longitudinal development of the chain.

14. A chain as in claims 2 and 12, characterised in that the means for traction or distancing a link from a neighboring link is a cam device (26) commanded by an oval washer (27) associated to each said pivot (7).

15. A chain as in the preceding claims, characterised in that the skewed axes (X-Y) are perpendicular one to the other.
